# EUROPEAN PATENT SPECIFICATION

(11) **EP 3 032 866 B1**
(45) Date of publication and mention of the grant of the patent: **08.08.2018**
(21) Application number: 14785996.1
(22) Date of filing: 25.04.2014
(51) Int. Cl.: H04W 36/00, H04W 36/22, H04W 84/12

(54) **SERVICE MIGRATION METHOD, RELATED DEVICE AND COMPUTER STORAGE MEDIUM**
DIENSTMIGRATIONSVERFAHREN, ZUGEHÖRIGE VORRICHTUNG UND COMPUTERSPEICHERMEDIUM
PROCÉDÉ DE MIGRATION DE SERVICE, DISPOSITIF ASSOCIÉ ET SUPPORT DE STOCKAGE INFORMATIQUE

(30) Priority: 09.08.2013 CN 201310345407
(43) Date of publication of application: 15.06.2016
(73) Proprietor: ZTE Corporation, Shenzhen, Guangdong 518057 (CN)
(72) Inventor: CUI, Yunpeng, Shenzhen Guangdong 518057 (CN); DAI, Qian, Shenzhen Guangdong 518057 (CN); YAO, Jun, Shenzhen Guangdong 518057 (CN)
(74) Representative: Lavoix
(86) International application number: PCT/CN2014/076281
(87) International publication number: WO 2014/169862

(56) References cited:
- WO-A1-2013/042330
- ZTE: "Optimization for Concurrent WLAN Offload/Anti-offload and 3GPP HO Procedure", 3GPP DRAFT; R2-141329 OPTIMIZATION FOR CONCURRENT WLAN OFFLOADANTI-OFFLOAD AND 3GPP HO PROCEDURE V2, 3RD GENERATION PARTNERSHIP PROJECT (3GPP), MOBILE COMPETENCE CENTRE ; 650, ROUTE DES LUCIOLES ; F-0 , vol. RAN WG2, no. Valencia, Spain; 20140331 - 20140404 22 March 2014 (2014-03-22), XP050792533, Retrieved from the Internet: URL:http://www.3gpp.org/ftp/Meetings_3GPP_ SYNC/RAN2/Docs/ [retrieved on 2014-03-22]
- TECHNICAL SPECIFICATION GROUP RADIO ACCESS NETWORK: '3GPP TR 37.834 V0.3.0: Study on WLAN/3GPP Radio Interworking (Release 12' 3RD GENERATION PARTNERSHIP PROJECT (3GPP 31 May 2013, pages 8 - 13, XP055259980
- HUAWEI: 'Assumptions and possible mobility scenarios' 3GPP TSG-RAN WG2 #81BIS R2-131365 19 April 2013, XP050699338

## Description

### TECHNICAL FIELD

The present disclosure relates to the field of mobile communications, and in particular to traffic steering methods, related devices and a computer storage medium.

### BACKGROUND

User Equipment (UE) supports both a fourth-generation wireless communication technology and an Institute of Electrical and Electronic Engineers 802.11 (IEEE802.11)-based Wireless Local Area Network (WLAN) technology. There is much UE with such a dual-mode characteristic, such as a smart phone. A WLAN has high-speed communication performance, so that WLAN is increasingly applied to blind sport coverage and hotspot coverage of 3rd Generation Partnership Project (3GPP) networks.

At present, the following three traffic steering solutions directed to interworking of a 3GPP network and a WLAN are accepted: in solution 1 and solution 2, UE executes traffic steering through existing strategy information and auxiliary information, and a difference between solution 1 and solution 2 is that a network side in solution 1 only provides auxiliary information such as a threshold value to assist the UE in network selection and a radio access network in solution 2 may provide auxiliary information similar to that in solution 1 and may also provide strategy information for network selection to assist the UE in network selection. The greatest difference between solution 3 and each of solution 1 and solution 2 is that the determination about whether traffic steering is performed in solution 3 is controlled by the network side rather than the UE.

Mobility in a 3GPP network is an important issue, a decision about mobility may influence network efficiency and a user experience, and here, mobility refers to handover from a source Evolved Node B (eNB) accessed by UE to a target eNB.

However, there are no norms for behaviours of a network side and UE in case of concurrence of mobility and traffic steering in present interworking of a 3GPP network and a WLAN, that is, there exists a problem of how to operate in case of coexistence of mobility and traffic steering, and different mobility and traffic steering processing mechanisms between the network and the UE may cause a network abnormity, an increase in signalling overhead and the like.

WO 2013/042330 A1 discloses an offload method.

### SUMMARY

In view of this, the embodiments of the present disclosure are mainly intended to provide traffic steering methods, related devices and a computer storage medium, which may solve the problem of how to operate when mobility and traffic steering coexist and thus avoid a network abnormity.

To this end, the technical solutions of the present disclosure are implemented as follows.

An embodiment of the present disclosure provides a traffic steering method, which may include that:
UE judges whether the UE meets a traffic steering condition or not; and
when the UE meets the traffic steering condition, the UE initiates a WLAN connection establishment according to a principle that a processing for the traffic steering is preferred to a processing for a handover according to the 3GPP protocol specification, and steers traffic to a WLAN.

Preferably, the method may further include that:
when a traffic steering decision is to steer all the traffic to the WLAN, the UE does not execute a handover after receiving from a source network a Radio Resource Control (RRC) connection reconfiguration message with a mobility control Information Element (IE).

Preferably, the method may further include that:
the UE does not send a handover related measurement report to the source network within a first preset time when the traffic steering decision is to steer all the traffic to the WLAN, or, a measurement result of the UE meets a condition of triggering a traffic steering process, or, the UE sends a traffic steering related measurement report.

Preferably, when the traffic steering decision is to steer all the traffic to the WLAN, after the traffic are steered to the WLAN, the method may further include that: the UE releases an RRC connection.

Preferably, when the traffic steering decision is to steer part of the traffic to the WLAN, after the part of the traffic are steered to the WLAN, the method may further include that: a handover is executed according to the 3GPP protocol specification.

Preferably, the traffic steering related measurement report and the handover related measurement report are sent using newly defined RRC signalling or measurement report signalling in the 3GPP protocol.

An embodiment of the present disclosure provides a traffic steering method, which may include that:
whether UE meets a traffic steering condition or not is judged; and
when the UE meets the traffic steering condition, a source network controls the UE to initiate a WLAN connection establishment according to a principle that a processing for the traffic steering is preferred to a processing for a handover according to the 3GPP protocol specification, and steers traffic to a WLAN.

Preferably, the method may further include that:
when a traffic steering decision is to steer all the traffic to the WLAN, the source network terminates a current handover.

Preferably, when the traffic steering decision is to steer all the traffic to the WLAN, the step that the source network controls the UE to initiate the WLAN connection establishment may be that:
the source network controls the UE to initiate the WLAN connection establishment by sending a steering command message to the UE.

Preferably, after the source network sends the steering command message, the method may further include that:
the source network releases an RRC connection.

Preferably, after the source network sends the steering command message, the method may further include that:
the source network does not execute a handover within a second preset time.

Preferably, the steering command message may be:
a newly defined RRC message; or,
a steering add list IE and/or steering release list IE that are/is added into an RRC connection reconfiguration message, wherein the steering add list IE is for representing that an established bearer is configured to load a traffic steered from the WLAN to a 3GPP network and the steering release list IE is for representing that the traffic are steered from the 3GPP network to the WLAN.

An embodiment of the present disclosure provides UE, which may include:
a first condition judgment unit, configured to judge whether the UE meets a traffic steering condition or not; and
a steering unit, configured to, when the UE meets the traffic steering condition, initiate a WLAN connection establishment according to a principle that a processing for a traffic steering is preferred to a processing for a handover according to the 3GPP protocol specification, and steer traffic to a WLAN.

Preferably, the UE may further include:
a connection establishment control unit, configured to, when a traffic steering decision is to steer all the traffic to the WLAN, not execute a handover after receiving an RRC connection reconfiguration message with a mobility control IE from a source network.

Preferably, the UE may further include:
a measurement report control unit, configured to not send a handover related measurement report to the source network within a first preset time, when the traffic steering decision is to steer all the traffic to the WLAN, or, a measurement result of the UE meets a condition of triggering a traffic steering process, or, the UE sends a traffic steering related measurement report.

An embodiment of the present disclosure provides a source network, which may include:
a second condition judgment unit, configured to judge whether UE meets a traffic steering condition or not; and
a steering control unit, configured to, when the UE meets the traffic steering condition, control the UE to initiate a WLAN connection establishment according to a principle that a processing for a traffic steering is preferred to a processing for a handover according to the 3GPP protocol specification, and steers traffic to a WLAN.

Preferably, the source network may further include:
a handover control unit, configured to, when a traffic steering decision is to steer all the traffic to the WLAN, terminate a current handover.

A computer storage medium is provided, in which computer-executable instructions may be stored, the computer-executable instruction being configured to execute the abovementioned methods.

From the above, the technical solutions of the embodiments of the present disclosure include that: UE judges whether it meets a traffic steering condition or not; and when the UE meets the traffic steering condition, the UE initiates a WLAN connection establishment according to a principle that preferred processing is for traffic steering , and steers traffic to the WLAN. In such a manner, the WLAN connection establishment is initiated according to the principle that preferred processing is for traffic steering , and the traffic are steered to the WLAN, so that the embodiments of the present disclosure may solve the problem of how to operate in case of coexistence of mobility and traffic steering to further avoid a network abnormity, save signalling overhead and optimize network performance.

### BRIEF DESCRIPTION OF THE DRAWINGS

Fig. 1 is an implementation flowchart of a traffic steering method according to an embodiment of the present disclosure;
Fig. 2 is an implementation flowchart of another traffic steering method according to an embodiment of the present disclosure;
Fig. 3 is a structure diagram of UE according to an embodiment of the present disclosure;
Fig. 4 is a structure diagram of a source network according to an embodiment of the present disclosure;
Fig. 5 is a flowchart of an example of a first embodiment of a traffic steering method according to the present disclosure;
Fig. 6 is a flowchart of an example of a second embodiment of a traffic steering method according to the present disclosure;
Fig. 7 is a flowchart of an example of a third embodiment of a traffic steering method according to the present disclosure; and
Fig. 8 is a flowchart of an example of a fourth embodiment of a traffic steering method according to the present disclosure.

### DETAILED DESCRIPTION

The present disclosure will be described below with reference to the drawings and embodiments in detail. It is to be noted that the embodiments in the present disclosure and characteristics in the embodiments can be combined under the condition of no conflicts.

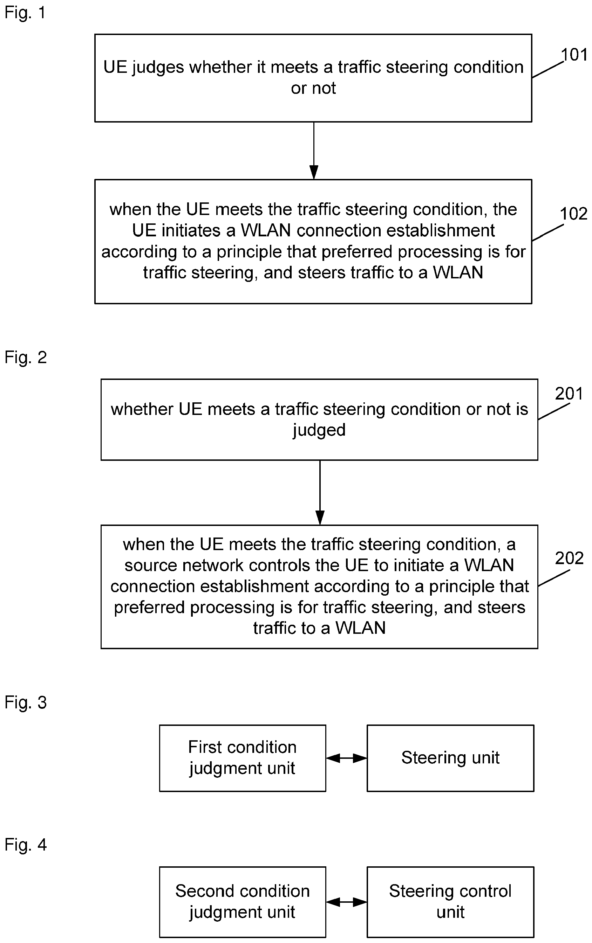

An embodiment of the present disclosure provides a traffic steering method, and as shown in Fig. 1, the method includes:
step 101: UE judges whether it meets a traffic steering condition or not; and
step 102: when the UE meets the traffic steering condition, the UE initiates a WLAN connection establishment according to a principle that preferred processing is for traffic steering , and steers traffic to a WLAN.

Preferably, the method further includes that:
when a traffic steering decision is to steer all the traffic to the WLAN, the UE does not execute a handover after receiving a Radio Resource Control (RRC) connection reconfiguration message with a mobility control Information Element (IE) from a source network.

Here, all the traffic are:
the sum of Guaranteed Bit Rate (GBR) traffic and non-GBR traffic under the same Packet Data Network (PDN) in the same UE; or,
the sum of GBR traffic and non-GBR traffic under different PDNs in the same UE.

Preferably, the method further includes that:
the UE does not send a handover related measurement report to the source network within a first preset time,
when the traffic steering decision is to steer all the traffic to the WLAN, or,
when a measurement result of the UE meets a condition of triggering a traffic steering process, or,
when the UE sends a traffic steering related measurement report.

Preferably, when the traffic steering decision is to steer all the traffic to the WLAN, after the traffic are steered to the WLAN, the method further includes that: the UE releases an RRC connection.

Preferably, when the traffic steering decision is to steer part of the traffic to the WLAN, after the part of the traffic are steered to the WLAN, the method further includes that: a handover is executed according to an existing protocol specification.

Preferably, the traffic steering related measurement report and the handover related measurement report are sent using newly defined RRC signalling or measurement report signalling in an existing protocol.

An embodiment of the present disclosure provides another traffic steering method, and as shown in Fig. 2, the method includes:
step 201: whether UE meets a traffic steering condition or not is judged; and
step 202: when the UE meets the traffic steering condition, a source network controls the UE to initiate a WLAN connection establishment according to a principle that preferred processing is for traffic steering , and steers traffic to a WLAN.

Preferably, the method further includes that:
when a traffic steering decision is to steer all the traffic to the WLAN, the source network terminates a current handover.

Preferably, when the traffic steering decision is to steer all the traffic to the WLAN, the step that the source network controls the UE to initiate the WLAN connection establishment is implemented as follows:
the source network controls the UE to initiate the WLAN connection establishment by sending a steering command message to the UE.

Preferably, after the source network sends the steering command message, the method further includes that:
the source network releases an RRC connection.

Preferably, after the source network sends the steering command message, the method further includes that:
the source network does not execute a handover within a second preset time.

Preferably, the steering command message is:
a newly defined RRC message; or,
a steering add list IE and/or steering release list IE added into an RRC connection reconfiguration message, the steering add list IE being used to represent that an established bearer is configured to load a traffic steered from the WLAN to a 3GPP network and the steering release list IE being used to represent that the traffic are steered from the 3GPP network to the WLAN.

An embodiment of the present disclosure provides UE, and as shown in Fig. 3, the UE includes:
a first condition judgment unit, configured to judge whether the UE meets a traffic steering condition or not; and
a steering unit, configured to, when the UE meets the traffic steering condition, initiate a WLAN connection establishment according to a principle that preferred processing is for traffic steering , and steer traffic to a WLAN.

Preferably, the UE further includes:
a connection establishment control unit, configured to, when a traffic steering decision is to steer all the traffic to the WLAN, not execute a handover after receiving an RRC connection reconfiguration message with a mobility control IE from a source network.

Preferably, the UE further includes:
a measurement report control unit, configured to not send a handover related measurement report to the source network within a first preset time, when the traffic steering decision is to steer all the traffic to the WLAN, or, when a measurement result of the UE meets a condition of triggering a traffic steering process, or, when the UE sends a traffic steering related measurement report.

The first condition judgment unit and the steering unit of the UE in the embodiment of the present disclosure may be implemented by a device such as a Central Processing Unit (CPU), a Digital Signal Processor (DSP) and a Field Programmable Gate Array (FPGA).

An embodiment of the present disclosure provides a source network, and as shown in Fig. 4, the source network includes:
a second condition judgment unit, configured to judge whether UE meets a traffic steering condition or not; and
a steering control unit, configured to, when the UE meets the traffic steering condition, control the UE to initiate a WLAN connection establishment according to a principle that preferred processing is for traffic steering , and steers traffic to a WLAN.

Preferably, the source network further includes:
a handover control unit, configured to, when a traffic steering decision is to steer all the traffic to the WLAN, terminate a current handover.

The second condition judgment unit and the steering control unit of the source network in the embodiment of the present disclosure may be implemented by a device such as a CPU, a DSP and an FPGA.

An embodiment of the present disclosure further provides a computer storage medium, in which computer-executable instructions are stored, the computer-executable instructions being configured to execute the abovementioned methods.

The present disclosure will be introduced below with the application of the present disclosure to a Long Term Evolution (LTE) network in detail. In the following embodiments, a source network is a source eNB, and a target network is a target eNB.

### Embodiment 1:

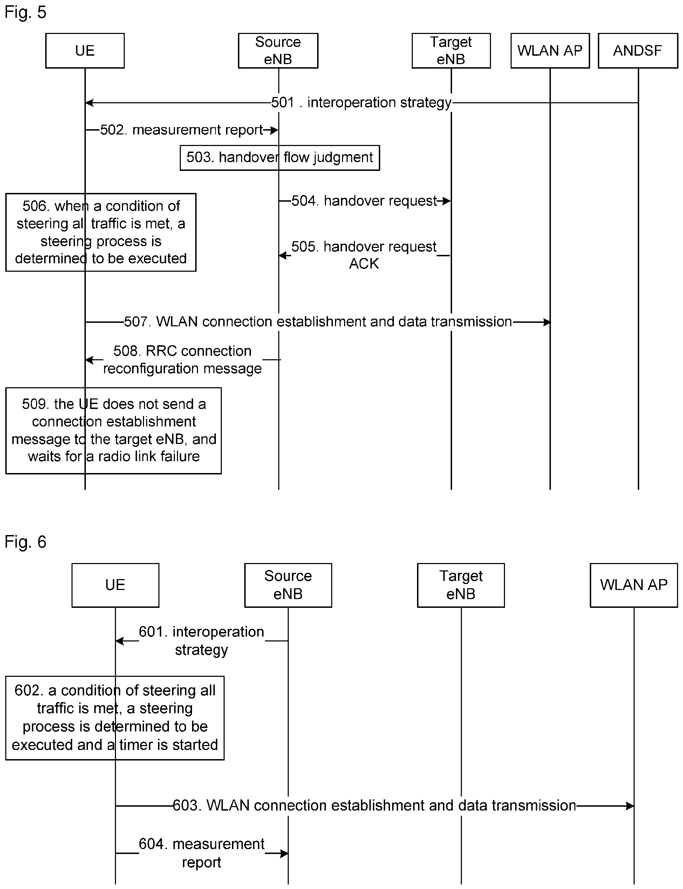

In the embodiment, UE determines to steer all traffic from a 3GPP network to a WLAN, and does not send a connection establishment message to the target eNB after receiving a handover command, and as shown in Fig. 5, a traffic steering method provided by the embodiment includes the following steps.

Step 501: the UE obtains an interoperation strategy for the 3GPP network and the WLAN.

In the embodiment, the UE acquires the interoperation strategy from an Access Network Discovery And Selection Function (ANDSF) serving as a network element of a core network.

Step 502: the UE in a connected state judges whether it meets a condition of sending a measurement report or not according to a measurement result, and when the condition of sending the measurement report is met, the UE sends the measurement report to the source eNB on a network side.

In the embodiment, the measurement report is triggered by a handover related measurement event.

Step 503: the source eNB judges whether to perform a handover flow or not after receiving the measurement report from the UE.

In the embodiment, the source eNB determines whether to execute a handover or not according to the measurement report.

Step 504: the source eNB sends a handover request to the target eNB.

In the embodiment, the source eNB sends the handover request to the target eNB meeting a condition.

Step 505: the target eNB accepts the handover request of the source eNB after receiving the handover request from the source eNB, and sends a handover request Acknowledgement (ACK) to the source eNB.

In the embodiment, the target eNB accepts the handover request, and sends the handover request ACK to the source eNB.

Step 506: the UE executes measurement according to the acquired interoperation strategy, and determines to execute a steering process when a condition of steering all traffic is met.

In the embodiment, the UE executes measurement according to the interoperation strategy acquired from the ANDSF, judges whether the condition of steering all the traffic is met or not, and determines to execute the steering process when the condition of steering all the traffic is met.

Step 506 may be executed before Step 505, or Step 504, or Step 503, or Step 502.

Step 507: the UE initiates a WLAN connection establishment, and steers all the traffic to the WLAN.

In the embodiment, the UE executes the WLAN connection establishment immediately when finishing executing Step 506, and steers all the traffic to the WLAN after a connection is successfully established.

Step 508: the source eNB sends an RRC connection reconfiguration message to the UE, the message containing a mobility control IE.

In the embodiment, the source eNB sends the RRC connection reconfiguration message with the mobility control IE to the UE to notify the UE to execute handover operation.

Step 509: the UE does not send the connection establishment message to the target eNB according to a principle that traffic steering is preferred.

In the embodiment, the UE does not send the connection establishment message to the target eNB according to the principle that traffic steering is preferred, and waits for a radio link failure, and the UE is then reconnected to a new network, i.e. the WLAN, through an RRC connection reestablishment.

### Embodiment 2

In the embodiment UE determines to steer all traffic to a WLAN, the UE does not send a handover related measurement report within a unit time T1, and as shown in Fig. 6, a traffic steering method provided by the embodiment includes the following steps.

Step 601: the UE obtains an interoperation strategy for a 3GPP network and the WLAN.

In the embodiment, the UE acquires the interoperation strategy from a source eNB.

Step 602: the UE executes measurement according to the acquired interoperation strategy, determines to execute a steering process when a condition of steering all the traffic is met, starts a timer, and does not send a measurement report to the source eNB on a network side during running of the timer.

In the embodiment, the UE executes measurement according to the interoperation strategy acquired from the source eNB, judges whether the condition of steering all the traffic is met or not, and determines to execute the steering process when the condition of steering all the traffic is met. The timer configured to control a handover related measurement report is started, and sending of the measurement report to the source eNB on the network side during running of the timer is forbidden.

Step 603: the UE initiates a WLAN connection establishment, and steers all the traffic to the WLAN.

In the embodiment, the UE executes the WLAN connection establishment immediately when finishing executing Step 603, and steers all the traffic to the WLAN after a connection is successfully established.

Step 604: the UE in a connected state judges whether it meets a condition of sending a measurement report or not according to a measurement result, and sends the measurement report to the source eNB on the network side when the condition of sending the measurement report is met and the timer stops running.

In the embodiment, the measurement report is triggered by a handover related measurement event, and the UE does not send the triggered measurement report according to a principle that traffic steering is preferred when the timer set in Step 602 still runs.

### Embodiment 3

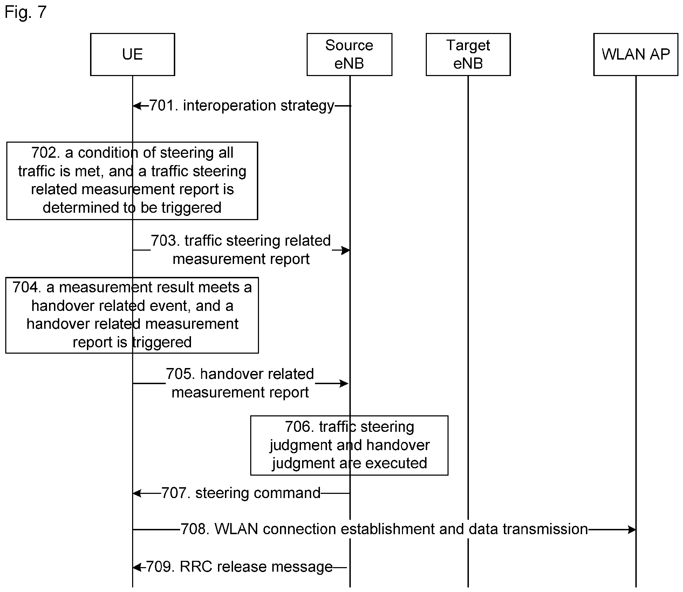

In the embodiment, a network side determines to steer all traffic to a WLAN, a source eNB releases an RRC connection after sending a steering command message to UE, and as shown in Fig. 7, a traffic steering method provided by the embodiment includes the following steps.

Step 701: the UE obtains an interoperation strategy for a 3GPP network and the WLAN.

In the embodiment, the UE acquires the interoperation strategy from a source eNB serving as a network element of an access network.

Step 702: the UE determines to trigger a traffic steering related measurement report when judging that a condition of steering all the traffic is met according to the obtained interoperation strategy.

In the embodiment, the UE executes measurement according to the acquired interoperation strategy, and triggers the traffic steering related measurement report when determining that the condition of steering all the traffic to the WLAN is met according to a measurement result.

Step 703: the UE sends the traffic steering related measurement report to the source eNB.

In the embodiment, the UE sends the traffic steering related measurement report to the source eNB by a measurement report message.

Step 704: the UE performs measurement, and triggers a handover related measurement report when the measurement result meets a handover related event.

In the embodiment, the UE judges whether a mobility measurement event triggering condition is met or not according to the obtained measurement result.

Step 705: the UE sends the handover related measurement report to the source eNB.

In the embodiment, the UE sends a mobility related measurement report to the source eNB on the network side to assist the network side in handover judgment according to the obtained measurement result.

Step 706: the source eNB on the network side executes traffic steering judgment and handover judgment after receiving the traffic steering related measurement report and handover related measurement report sent by the UE.

In the embodiment, the source eNB performs traffic steering judgment and handover judgment after receiving the traffic steering related measurement report and handover related measurement report from the UE, and the eNB determines to execute traffic steering operation according to a principle that traffic steering is preferred, and does not send handover request signalling to a target eNB.

Step 707: the source eNB sends a steering command message to the UE.

In the embodiment, the source eNB judges whether the measurement reports reported by the UE meet a request of steering all the traffic or not, and sends the steering command message to the UE to command the UE to execute traffic steering operation.

Step 708: the UE initiates a WLAN connection establishment after receiving the steering command message.

In the embodiment, the UE initiates the connection establishment to a WLAN Access Point (AP) after receiving the steering command message from the eNB, and performs data transmission after a connection is successfully established.

Step 709: the source eNB sends an RRC release message to the UE after finishing sending the steering command message.

In the embodiment, the source eNB releases the RRC connection immediately when sending the steering command message to the UE according to the principle that traffic steering is preferred.

Step 709 may be initiated before Step 708.

### Embodiment 4

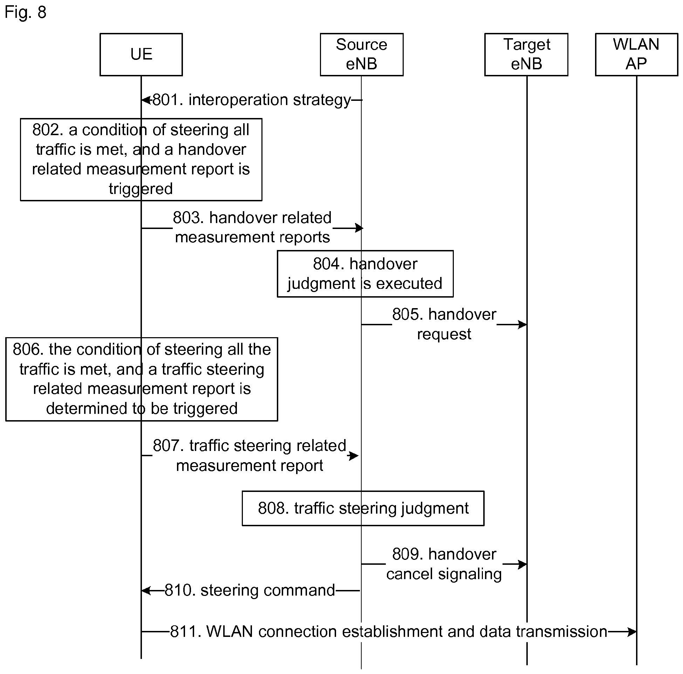

In the embodiment, a network side determines to steer all traffic to a WLAN, a source eNB terminates a current handover, and as shown in Fig. 8, a traffic steering method provided by the embodiment includes the following steps:
Step 801: UE obtains an interoperation strategy for a 3GPP network and the WLAN.

In the embodiment, the UE acquires the interoperation strategy from the source eNB serving as a network element of an access network.

Step 802: the UE performs measurement, and triggers a handover related measurement report when a measurement result meets a handover related event.

In the embodiment, the UE judges whether a condition of triggering a mobility measurement event is met or not according to the obtained measurement result.

Step 803: the UE sends a handover related measurement report to the source eNB on the network side.

In the embodiment, the UE sends the handover related measurement report to the source eNB on the network side to assist the network side in handover judgment according to the obtained measurement result.

Step 804: the source eNB on the network side executes a handover judgment after receiving the handover related measurement report from the UE.

In the embodiment, the networek side executes a handover judgment after receiving the handover related measurement report from the UE, and determines to switch the UE to a target eNB.

Step 805: the source eNB sends a handover request to the target eNB.

In the embodiment, the source eNB sends the handover request to the target eNB to switch the UE meeting a handover condition to the target eNB.

Step 806: the UE determines to trigger a traffic steering related measurement report when determining that a condition of steering all the traffic is met according to the obtained interoperation strategy.

In the embodiment, the UE triggers the traffic steering related measurement report when determining that the condition of steering all the traffic to the WLAN is met according to the measurement result.

Step 807: the UE sends the traffic steering related measurement report to the source eNB on the network side.

In the embodiment, the UE sends the traffic steering related measurement report to the source eNB by a measurement report message.

Step 808: the source eNB on the network side executes a traffic steering judgment according to the received measurement report related to the traffic steering.

In the embodiment, the source eNB executes a traffic steering judgment after receiving the traffic steering related measurement report from the UE, the source eNB determines that it is necessary to execute traffic steering operation according to a principle that traffic steering is preferred, and the source eNB stops the current handover after making a traffic steering decision if the handover is being executed.

Step 809: the source eNB sends handover cancel signalling to the target eNB to terminate the current handover.

In the embodiment, the source eNB sends the handover cancel signalling to the target eNB to terminate the current handover according to the principle that traffic steering is preferred after making the traffic steering decision.

Step 810: the source eNB sends a steering command message to the UE.

In the embodiment, the source eNB determines that the measurement reports reported by the UE meet a request of steering all the traffic, and sends the steering command message to the UE to command the UE to execute traffic steering operation.

Step 811: the UE initiates a WLAN connection establishment after receiving the steering command message.

In the embodiment, the UE initiates the connection establishment directed to a WLAN AP after receiving the steering command message sent by the source eNB, and performs data transmission after a connection is successfully established.

During a practical application, the embodiment of the present disclosure is also applicable to a Universal Mobile Telecommunications System (UMTS), and the application of the embodiment of the present disclosure to a UMTS network is similar to the application of the embodiment of the present disclosure to the LTE network, and will not be elaborated.

Each unit may be implemented by a CPU, DSP or FPGA in electronic equipment.

Those skilled in the art should know that the embodiments of the present disclosure may be provided as a method, a system or a computer program product. Therefore, the present disclosure may adopt a pure hardware embodiment, a pure software embodiment and a combined software and hardware embodiment. Moreover, the present disclosure may adopt a computer program product implemented on one or more computer-available storage media (including, but not limited to, a disk memory, a Compact Disc Read-Only Memory (CD-ROM) and an optical memory) including computer-available program codes.

The present disclosure is described with reference to flowcharts and/or block diagrams of the method, the equipment (system) and the computer program product according to the embodiments of the present disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto a computer or other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

The above are only the preferred embodiments of the present disclosure and not intended to limit the present disclosure, and for those skilled in the art, the present disclosure may have various modifications and variations.

### INDUSTRIAL APPLICABILITY

Based on the technical solutions of the embodiments of the present disclosure, UE judges whether it meets a traffic steering condition or not; and when the UE meets the traffic steering condition, the UE initiates a WLAN connection establishment according to a principle that preferred processing is for traffic steering , and steers the traffic to the WLAN. In such a manner, the WLAN connection establishment is initiated according to the principle that preferred processing is for traffic steering , and the traffic are steered to the WLAN, so that the embodiments of the present disclosure may solve the problem of how to operate in case of coexistence of mobility and traffic steering to further avoid a network abnormity, save signalling overhead and optimize network performance.

## Claims

1. A traffic steering method, **characterized by** comprising:
judging (S101), by User Equipment, UE, whether the UE meets a traffic steering condition or not; and
when the UE meets the traffic steering condition, initiating (S102), by the UE, a Wireless Local Area Network, WLAN connection establishment according to a principle that a processing for the traffic steering is preferred to a processing for a handover according to a 3^{rd} Generation Partnership Project, 3GPP, protocol specification, and steering traffic to a WLAN.

2. The method according to claim 1, further comprising:
when a traffic steering decision is to steer all the traffic to the WLAN, not executing, by the UE, a handover after receiving from a source network a Radio Resource Control, RRC connection reconfiguration message with a mobility control Information Element, IE.

3. The method according to claim 1, further comprising:
not sending, by the UE, a handover related measurement report to the source network within a first preset time when the traffic steering decision is to steer all the traffic to the WLAN, or, a measurement result of the UE meets a condition of triggering a traffic steering process, or, the UE sends a traffic steering related measurement report.

4. The method according to claim 1, when the traffic steering decision is to steer all the traffic to the WLAN, after steering the traffic to the WLAN, the method further comprising: releasing, by the UE, an RRC connection; or,
when the traffic steering decision is to steer part of the traffic to the WLAN, after steering the part of the traffic to the WLAN, the method further comprising: executing the handover according to the 3GPP protocol specification.

5. The method according to claim 3, wherein the traffic steering related measurement report and the handover related measurement report are sent using newly defined RRC signalling or measurement report signalling in the 3GPP protocol.

6. A traffic steering method, **characterized by** comprising:
judging (S201) whether User Equipment, UE meets a traffic steering condition or not; and
when the UE meets the traffic steering condition, controlling (S202), by a source network, the UE to initiate a Wireless Local Area Network, WLAN connection establishment according to a principle that a processing for the traffic steering is preferred to a processing for a handover according to a 3^{rd} Generation Partnership Project, 3GPP, protocol specification, and steering traffic to a WLAN.

7. The method according to claim 6, further comprising:
when a traffic steering decision is to steer all the traffic to the WLAN, terminating, by the source network, a current handover.

8. The method according to claim 6, wherein, when the traffic steering decision is to steer all the traffic to the WLAN, controlling, by the source network, the UE to initiate the WLAN connection establishment is:
controlling, by the source network, the UE to initiate the WLAN connection establishment by sending a steering command message to the UE.

9. The method according to claim 8, after sending, by the source network, the steering command message, the method further comprising:
releasing, by the source network, a Radio Resource Control, RRC connection; or
not executing, by the source network, a handover within a second preset time.

10. The method according to claim 8, wherein the steering command message is:
a newly defined RRC message; or,
a steering add list Information Element, IE and/or steering release list IE that are/is added into an RRC connection reconfiguration message, wherein the steering add list IE is for representing that an established bearer is configured to load a traffic steered from the WLAN to a 3GPP network and the steering release list IE is for representing that the traffic are steered from the 3GPP network to the WLAN.

11. User Equipment, UE, **characterized by** comprising:
a first condition judgment unit, configured to judge whether the UE meets a traffic steering condition or not; and
a steering unit, configured to, when the UE meets the traffic steering condition, initiate a Wireless Local Area Network, WLAN connection establishment according to a principle that a processing for a traffic steering is preferred to a processing for a handover according to a 3^{rd} Generation Partnership Project, 3GPP, protocol specification, and steer traffic to a WLAN.

12. The UE according to claim 11, further comprising:
a connection establishment control unit, configured to, when a traffic steering decision is to steer all the traffic to the WLAN, not execute the handover after receiving a Radio Resource Control, RRC connection reconfiguration message with a mobility control Information Element, IE from a source network; or
a measurement report control unit, configured to not send a handover related measurement report to the source network within a first preset time when the traffic steering decision is to steer all the traffic to the WLAN, or, a measurement result of the UE meets a condition of triggering a traffic steering process, or, the UE sends a traffic steering related measurement report.

13. A source network, **characterized by** comprising:
a second condition judgment unit, configured to judge whether User Equipment, UE meets a traffic steering condition or not; and
a steering control unit, configured to, when the UE meets the traffic steering condition, control the UE to initiate a Wireless Local Area Network, WLAN connection establishment according to a principle that a processing for a traffic steering is preferred to a processing for a handover according to a 3^{rd} Generation Partnership Project, 3GPP, protocol specification, and steers traffic to a WLAN.

14. The source network according to claim 13, further comprising:
a handover control unit, configured to, when a traffic steering decision is to steer all the traffic to the WLAN, terminate a current handover.

15. A computer storage medium storing computer-executable instructions which are configured to perform all steps of the method according to any one of claims 1 to 5 and claims 6 to 10, when said instructions are executed by a computer.

## Patentansprüche

1. Verkehrssteuerungsverfahren, **dadurch gekennzeichnet, dass** es umfasst:
Beurteilen (S101) durch ein Benutzergerät UE, ob das UE eine Verkehrssteuerungsbedingung erfüllt oder nicht, und
wenn das UE die Verkehrssteuerungsbedingung erfüllt, Einleiten (S102) des Aufbaus einer WLAN-Verbindung durch das UE nach dem Prinzip, dass eine Verarbeitung für die Verkehrssteuerung einer Verarbeitung für eine Übergabe nach einer 3GPP-Protokollvorgabe (3rd Generation Partnership Project), und Zusteuern von Verkehr auf ein WLAN.

2. Verfahren nach Anspruch 1, ferner umfassend:
wenn eine Verkehrssteuerungsentscheidung lautet, dass der gesamte Verkehr dem WLAN zuzusteuern ist, Nichtausführen einer Übergabe durch das UE nach dem Empfang einer RRC-Verbindungsrekonfigurationsnachricht (Radio Resource Control) von einem Quellnetzwerk mit einem mobilitätssteuernden Informationselement IE.

3. Verfahren nach Anspruch 1, ferner umfassend:
Nichtsenden eines mit einer Übergabe zusammenhängenden Messberichts durch das UE an das Quellnetzwerk binnen einer ersten vorgegebenen Zeit, wenn die Verkehrssteuerungsentscheidung lautet, dass der gesamte Verkehr dem WLAN zuzusteuern ist, oder wenn ein Messergebnis des UE eine Bedingung der Auslösung eines Verkehrssteuerungsprozesses erfüllt, oder das UE einen mit der Verkehrssteuerung zusammenhängenden Messbericht absendet.

4. Verfahren nach Anspruch 1, wenn die Verkehrssteuerungsentscheidung lautet, dass der gesamte Verkehr dem WLAN zuzusteuern ist, nachdem der Verkehr dem WLAN zugesteuert worden ist, wobei das Verfahren ferner umfasst: Freigeben einer RRC-Verbindung durch das UE, oder
wenn die Verkehrssteuerungsentscheidung lautet, dass ein Teil des Verkehrs dem WLAN zuzusteuern ist, nachdem ein Teil des Verkehrs dem WLAN zugesteuert worden ist, das Verfahren ferner umfasst: Ausführen der Übergabe nach der 3GPP-Protokollvorgabe.

5. Verfahren nach Anspruch 3, wobei der mit der Verkehrssteuerung zusammenhängende Messbericht und der mit der Übergabe zusammenhängende Messbericht mit einer neu definierten RRC-Signalisierung oder Messberichtsignalisierung im 3GPP-Protokoll abgesendet werden.

6. Verkehrssteuerungsverfahren, **dadurch gekennzeichnet, dass** es umfasst:
Beurteilen (S201), ob ein UE eine Verkehrssteuerungsbedingung erfüllt oder nicht, und
wenn das UE die Verkehrssteuerungsbedingung erfüllt, Steuern (S202) des UE durch ein Quellnetzwerk zur Einleitung des Aufbaus einer WLAN-Verbindung durch das UE nach dem Prinzip, dass eine Verarbeitung für die Verkehrssteuerung einer Verarbeitung für eine Übergabe nach einer 3GPP-Protokollvorgabe (3rd Generation Partnership Project), und Zusteuern von Verkehr auf ein WLAN.

7. Verfahren nach Anspruch 6, ferner umfassend:
wenn eine Verkehrssteuerungsentscheidung lautet, dass der gesamte Verkehr dem WLAN zuzusteuern ist, Beenden einer aktuellen Übergabe durch das Quellnetzwerk.

8. Verfahren nach Anspruch 6, wobei, wenn die Verkehrssteuerungsentscheidung lautet, dass der gesamte Verkehr dem WLAN zuzusteuern ist, das Steuern des UE durch das Quellnetzwerk zur Einleitung des Aufbaus der WLAN-Verbindung heißt:
Steuern des UE durch das Quellnetzwerk zur Einleitung des Aufbaus der WLAN-Verbindung durch Senden einer Steuerungsbefehlsnachricht an das UE.

9. Verfahren nach Anspruch 8, wobei das Verfahren nach dem Senden der Steuerungsbefehlsnachricht durch das Quellnetzwerk ferner umfasst:
Freigeben einer RRC-Verbindung durch das Quellnetzwerk; oder
Nichtausführen einer Übergabe durch das Quellnetzwerk binnen einer zweiten vorgegebenen Zeit.

10. Verfahren nach Anspruch 8, wobei die Steuerbefehlnachricht:
eine neu definierte RRC-Nachricht oder
ein Informationselement IE einer Steuerungs-Hinzufügungsliste und/oder einer Steuerungs-Freigabeliste ist, die einer RRC-Verbindungsrekonfigurationsnachricht hinzugefügt werden, wobei das IE der Steuerungs-Hinzufügungsliste darstellen soll, dass ein etablierter Träger zum Laden eines vom WLAN zu einem 3GPP-Netzwerk gesteuerten Verkehrs konfiguriert ist, und das IE der Steuerungs-Freigabeliste darstellen soll, dass der Verkehr vom 3GPP-Netzwerk zum WLAN gesteuert wird.

11. Benutzergerät UE, **dadurch gekennzeichnet, dass** es umfasst:
eine erste Bedingungs-Beurteilungseinheit, die derart konfiguriert ist, dass sie beurteilt, ob das UE eine Verkehrssteuerungsbedingung erfüllt oder nicht, und
eine Steuerungseinheit, die derart konfiguriert ist, dass sie, wenn das UE die Verkehrssteuerungsbedingung erfüllt, den Aufbau einer WLAN-Verbindung durch das UE nach dem Prinzip einleitet, dass eine Verarbeitung für die Verkehrssteuerung einer Verarbeitung für eine Übergabe nach einer 3GPP-Protokollvorgabe (3rd Generation Partnership Project), und Verkehr auf ein WLAN zusteuert.

12. UE nach Anspruch 11, ferner umfassend:
eine Verbindungsaufbausteuereinheit, die derart konfiguriert ist, dass sie, wenn eine Verkehrssteuerungsentscheidung lautet, dass der gesamte Verkehr dem WLAN zuzusteuern ist, eine Übergabe durch das UE nach dem Empfang einer RRC-Verbindungsrekonfigurationsnachricht (Radio Resource Control) von einem Quellnetzwerk mit einem mobilitätssteuernden Informationselement IE nicht ausführt; oder
eine Messberichtsteuereinheit, die konfiguriert ist zum Nichtsenden eines mit einer Übergabe zusammenhängenden Messberichts durch das UE an das Quellnetzwerk binnen einer ersten vorgegebenen Zeit, wenn die Verkehrssteuerungsentscheidung lautet, dass der gesamte Verkehr dem WLAN zuzusteuern ist, oder wenn ein Messergebnis des UE eine Bedingung der Auslösung eines Verkehrssteuerungsprozesses erfüllt, oder das UE einen mit der Verkehrssteuerung zusammenhängenden Messbericht absendet.

13. Quellnetzwerk, **dadurch gekennzeichnet, dass** es umfasst:
eine zweite Bedingungs-Beurteilungseinheit, die derart konfiguriert ist, dass sie beurteilt, ob das UE eine Verkehrssteuerungsbedingung erfüllt oder nicht, und
eine Steuerungskontrolleinheit, die derart konfiguriert ist, dass sie, wenn das UE die Verkehrssteuerungsbedingung erfüllt, das UE zur Einleitung des Aufbaus einer WLAN-Verbindung durch das UE nach dem Prinzip steuert, dass eine Verarbeitung für die Verkehrssteuerung einer Verarbeitung für eine Übergabe nach einer 3GPP-Protokollvorgabe (3rd Generation Partnership Project), und Verkehr auf ein WLAN zusteuert.

14. Quellnetzwerk nach Anspruch 13, ferner umfassend:
eine Übergabesteuereinheit, die derart konfiguriert ist, dass sie eine aktuelle Übergabe beendet, wenn die Verkehrssteuerungsentscheidung lautet, dass der gesamte Verkehr dem WLAN zuzusteuern ist.

15. Computerdatenträger, auf dem von einem Computer ausführbare Befehle gespeichert sind, die zur Ausführung aller Schritte des Verfahrens nach einem der Ansprüche 1 - 5 und der Ansprüche 6-10 konfiguriert ist, wenn diese Befehle durch einen Computer ausgeführt werden.

## Revendications

1. Procédé de pilotage du trafic, **caractérisé en ce qu'**il comprend les étapes ci-dessous consistant à :
déterminer (S101), par le biais d'un équipement d'utilisateur, UE, si l'équipement UE remplit ou non une condition de pilotage du trafic ; et
lorsque l'équipement UE remplit la condition de pilotage du trafic, initier (S102), par le biais de l'équipement UE, un établissement de connexion de réseau local sans fil, WLAN, conformément à un principe selon lequel un traitement pour le pilotage du trafic est préféré à un traitement pour un transfert intercellulaire selon une spécification de protocole de projet de partenariat de 3^{ème} génération, 3GPP, et piloter le trafic vers un réseau WLAN.

2. Procédé selon la revendication 1, comprenant en outre l'étape ci-dessous consistant à :
lorsqu'une décision de pilotage du trafic consiste à piloter la totalité du trafic vers le réseau WLAN, ne pas exécuter, par le biais de l'équipement UE, un transfert intercellulaire, suite à la réception, en provenance d'un réseau source, d'un message de reconfiguration de connexion de gestion des ressources radio, RRC, avec un élément d'information de gestion de la mobilité, IE.

3. Procédé selon la revendication 1, comprenant en outre l'étape ci-dessous consistant à :
ne pas envoyer, par le biais de l'équipement UE, un rapport de mesure connexe au transfert intercellulaire, au réseau source, au cours d'un premier temps prédéfini, lorsque la décision de pilotage du trafic consiste à piloter la totalité du trafic vers le réseau WLAN, ou, lorsqu'un résultat de mesure de l'équipement UE remplit une condition de déclenchement d'un processus de pilotage du trafic, ou, lorsque l'équipement UE envoie un rapport de mesure connexe au pilotage du trafic.

4. Procédé selon la revendication 1, dans lequel, lorsque la décision de pilotage du trafic consiste à piloter la totalité du trafic vers le réseau WLAN, après avoir piloté le trafic vers le réseau WLAN, le procédé comprend en outre l'étape consistant à : libérer, par le biais de l'équipement UE, une connexion de gestion RRC ; ou,
dans lequel, lorsque la décision de pilotage du trafic consiste à piloter une partie du trafic vers le réseau WLAN, après avoir piloté la partie du trafic vers le réseau WLAN, le procédé comprend en outre l'étape consistant à : exécuter le transfert intercellulaire selon la spécification de protocole 3GPP.

5. Procédé selon la revendication 3, dans lequel le rapport de mesure connexe au pilotage du trafic et le rapport de mesure connexe au transfert intercellulaire sont envoyés en utilisant une signalisation de gestion RRC nouvellement définie ou une signalisation de rapport de mesure nouvellement définie dans le protocole 3GPP.

6. Procédé de pilotage du trafic, **caractérisé en ce qu'**il comprend les étapes ci-dessous consistant à :
déterminer (S201) si l'équipement d'utilisateur, UE, remplit ou non une condition de pilotage du trafic ; et
lorsque l'équipement UE remplit la condition de pilotage du trafic, commander (S202), par le biais d'un réseau source, à l'équipement UE, d'initier un établissement de connexion de réseau local sans fil, WLAN, conformément à un principe selon lequel un traitement pour le pilotage du trafic est préféré à un traitement pour un transfert intercellulaire selon une spécification de protocole de projet de partenariat de 3^{ème} génération, 3GPP, et piloter le trafic vers un réseau WLAN.

7. Procédé selon la revendication 6, comprenant en outre l'étape ci-dessous consistant à :
lorsqu'une décision de pilotage du trafic consiste à piloter la totalité du trafic vers le réseau WLAN, mettre fin, par le biais du réseau source, à un transfert intercellulaire en cours.

8. Procédé selon la revendication 6, dans lequel, lorsque la décision de pilotage du trafic consiste à piloter la totalité du trafic vers le réseau WLAN, l'étape consistant à commander, par le biais du réseau source, à l'équipement UE, d'initier l'établissement de connexion de réseau WLAN, consiste à :
commander, par le biais du réseau source, à l'équipement UE, d'initier l'établissement de connexion de réseau WLAN en envoyant un message d'instruction de pilotage à l'équipement UE.

9. Procédé selon la revendication 8, dans lequel, suite à l'étape d'envoi, par le réseau source, du message d'instruction de pilotage, le procédé comprend en outre l'étape ci-dessous consistant à :
libérer, par le biais du réseau source, une connexion de gestion des ressources radio, RRC ; ou
ne pas exécuter, par le biais du réseau source, un transfert intercellulaire au cours d'un second temps prédéfini.

10. Procédé selon la revendication 8, dans lequel le message d'instruction de pilotage correspond à :
un message de gestion RRC nouvellement défini ; ou,
un élément d'information, IE, de liste d'ajout de pilotage, et/ou un élément IE de liste de libération de pilotage, qui est/sont ajouté(s) dans un message de reconfiguration de connexion de gestion RRC, dans lequel l'élément IE de liste d'ajout de pilotage est destiné à représenter qu'une porteuse établie est configurée de manière à charger un trafic piloté du réseau WLAN à un réseau 3GPP, et l'élément IE de liste de libération de pilotage est destiné à représenter que le trafic est piloté du réseau 3GPP au réseau WLAN.

11. Équipement d'utilisateur, UE, **caractérisé en ce qu'**il comprend :
une première unité de détermination de condition, configurée de manière à déterminer si l'équipement UE remplit ou non une condition de pilotage du trafic ; et
une unité de pilotage, configurée de manière à, lorsque l'équipement UE remplit la condition de pilotage du trafic, initier un établissement de connexion de réseau local sans fil, WLAN, conformément à un principe selon lequel un traitement pour le pilotage du trafic est préféré à un traitement pour un transfert intercellulaire selon une spécification de protocole de projet de partenariat de 3^{ème} génération, 3GPP, et piloter le trafic vers un réseau WLAN.

12. Équipement UE selon la revendication 11, comprenant en outre :
une unité de commande d'établissement de connexion, configurée de manière à, lorsqu'une décision de pilotage du trafic consiste à piloter la totalité du trafic vers le réseau WLAN, ne pas exécuter le transfert intercellulaire, suite à la réception d'un message de reconfiguration de connexion de gestion des ressources radio, RRC, avec un élément d'information de gestion de la mobilité, IE, en provenance d'un réseau source ; ou
une unité de commande de rapport de mesure, configurée de manière à ne pas envoyer un rapport de mesure connexe au transfert intercellulaire, au réseau source, au cours d'un premier temps prédéfini, lorsque la décision de pilotage du trafic consiste à piloter la totalité du trafic vers le réseau WLAN, ou, lorsqu'un résultat de mesure de l'équipement UE remplit une condition de déclenchement d'un processus de pilotage du trafic, ou, lorsque l'équipement UE envoie un rapport de mesure connexe au pilotage du trafic.

13. Réseau source, **caractérisé en ce qu'**il comprend :
une seconde unité de détermination de condition, configurée de manière à déterminer si l'équipement d'utilisateur, UE remplit ou non une condition de pilotage du trafic ; et
une unité de commande de pilotage, configurée de manière à, lorsque l'équipement UE remplit la condition de pilotage du trafic, commander, à l'équipement UE, d'initier un établissement de connexion de réseau local sans fil, WLAN, conformément à un principe selon lequel un traitement pour un pilotage du trafic est préféré à un traitement pour un transfert intercellulaire selon une spécification de protocole de projet de partenariat de 3^{ème} génération, 3GPP, et à piloter le trafic vers un réseau WLAN.

14. Réseau source selon la revendication 13, comprenant en outre :
une unité de commande de transfert intercellulaire, configurée de manière à, lorsqu'une décision de pilotage du trafic consiste à piloter la totalité du trafic vers le réseau WLAN, mettre fin à un transfert intercellulaire en cours.

15. Support de stockage informatique stockant des instructions exécutables par ordinateur qui sont configurées de manière à mettre en oeuvre la totalité des étapes du procédé selon l'une quelconque des revendications 1 à 5 et 10, lorsque lesdites instructions sont exécutées par un ordinateur.
